Europäisches Patentamt

**European Patent Office**

**Office européen des brevets**

(11) Veröffentlichungsnummer: **0 078 372**
A2

(12) # EUROPÄISCHE PATENTANMELDUNG

(21) Anmeldenummer: **82107423.4**

(22) Anmeldetag: **16.08.82**

(51) Int. Cl.³: **G 01 D 11/28,** G 12 B 11/00

(30) Priorität: **23.10.81 DE 3142098**

(43) Veröffentlichungstag der Anmeldung: **11.05.83**
**Patentblatt 83/19**

(84) Benannte Vertragsstaaten: **DE FR GB NL SE**

(71) Anmelder: **VDO Adolf Schindling AG, Gräfstrasse 103,
D-6000 Frankfurt/Main (DE)**

(72) Erfinder: **Turck, Heinz, Altenhalner Strasse 65,
D-6233 Kelkheim (DE)**

(74) Vertreter: **Könekamp, Herbert, Dipl.-Ing., Sodener
Strasse 9, D-6231 Schwalbach (DE)**

(54) **Anzelgeeinrichtung.**

(57) Die Erfindung betrifft eine Anzeigeeinrichtung mit einem Ziffernblatt (1) aus transparentem Material, in das von der Seite her Licht einleitbar ist. Unter dem Ziffernblatt (1) ist um eine Zeigerachse (15) drehbar ein leuchtender Zeiger (10) angeordnet, der ebenfalls aus transparentem Material besteht. An einer Umlenkfläche (12) des Zeigers (10) werden Lichtstrahlen in Zeigerlängsrichtung gestrahlt. Durch lichtausstrahlende Ausgestaltung des Zeigers (10) erscheint für einen Beobachter der Zeiger leuchtend. Da die dem Beobachter zugewandte Oberfläche (6) des Ziffernblattes (1) bis auf einen konzentrischen Ring (5) aufgerauht, der Ring aber poliert ist, leuchtet die ganze Fläche des Ziffernblattes 1 matt, während der Ring dunkel bleibt. Nur an der Stelle des Zeigers (10) leuchtet dieser hell-strahlend durch den Ring (5).

0078372

VDO Adolf Schindling AG     - 1 -        Gräfstraße 103
6000 Frankfurt/Main 90


G-S Kl-do
1624
20.Oktober 1981


## Anzeigeeinrichtung


Die Erfindung bezieht sich auf eine Anzeigeeinrichtung mit einem Ziffernblatt aus transparentem Material, mit einer quer zur Blickrichtung eines Beobachters in das Ziffernblatt einstrahlenden Lichtquelle, mit einem leuchtenden, um eine Zeigerachse drehbaren Zeiger, der aus transparentem Material besteht und auf der dem Beobachter abgewandten Seite des Ziffernblattes angeordnet ist, mit einer am Zeiger ausgebildeten, koaxial zur Zeigerachse in den Zeiger eingeleitete Lichtstrahlen in Zeigerlängsrichtung lenkenden Umlenkfläche, sowie einer lichtausstrahlenden Ausgestaltung des Zeigers.

Bei derartigen bekannten Anzeigeeinrichtungen besteht das Problem, daß keine klar und scharf abgegrenzte Erkennbarkeit der Zeigerstellung vorhanden ist.

Es ist daher Aufgabe der Erfindung eine Anzeigeeinrichtung nach dem Oberbegriff zu schaffen, die sich durch eine klare Erkennbarkeit der Zeigerstellung auszeichnet.

Diese Aufgabe wird erfindungsgemäß dadurch gelöst, daß die dem Beobachter zugewandte Oberfläche des Ziffernblattes mit Ausnahme eines zur Zeigerachse konzentrischen polierten Kreises oder Ringes aufgerauht und die dem Beobachter abgewandte Oberfläche des Ziffernblattes poliert ist. Durch diese Ausbildung erscheint für den Beobachter der Ring oder Kreis dunkel in einem matt-leuchtenden Umfeld, da das Ziffernblatt nur im aufgerauhten Bereich leuchtet, im Bereich des polierten Ringes oder Kreises aber ein Austreten von Lichtstrahlen aus dem als Lichtleiter wirkenden Ziffernblatt verhindert wird.

Diese Verhinderung des Lichtaustritts wird durch Totalreflexion hervorgerufen, da die durch das Ziffernblatt geleiteten Strahlen allenfalls in einem sehr flachen Winkel auf die Oberfläche des Ziffernblattes auftreffen.

Im Bereich der Aufrauhung werden die Lichtstrahlen aber nach außen geleitet, da hier an der Oberflächenstruktur relativ steile Auftreffwinkel für die Lichtstrahlen gegeben sind. Die feine und möglichst auch unregelmäßige Struktur der Aufrauhung führt zu dem matten Leuchten. Ein Blenden ist somit vermieden.

An der Stelle aber, an der der Zeiger sich befindet, trifft das vom Zeiger abgestrahlte Licht in einem steilen Winkel auf das Ziffernblatt und kann daher quer durchtreten. Somit erstrahlt für den Beobachter der Zeiger hell-leuchtend in dem ansonsten dunklen Ring oder Kreis.

Dieses Leuchten ist wesentlich stärker als das matt-leuchtende Umfeld, so daß der Zeiger dem Beobachter besonders gut auffällt.

Besonders dunkel und damit verstärkt kontrastreich wird der Kreis oder Ring, wenn die Hintergrundfläche hinter dem Zeiger dunkel, möglichst schwarz eingefärbt ist.

Ein besonders starkes Leuchten wird beim Zeiger dadurch erreicht, daß der Zeiger entweder aus einem fluoreszierenden Material besteht oder mit Ausnahme der dem Ziffernblatt zugewandten Fläche allseitig mit einer lichtreflektierenden Ummantelung versehen ist. Dabei kann der Zeiger mit einer Ummantelung von weißer Farbe versehen sein.

Um entweder den Lichtverlust über die Länge des Zeigers auszugleichen oder aber sogar den Endbereich des Zeigers stärker strahlen zu lassen als den restlichen Teil des Zeigers, kann die lichtreflektierende Fläche im Bereich des freien Endes des Zeigers zum Ziffernblatt hin geneigt sein. Eine spezielle Ausführungsform davon besteht darin, daß die lichtreflektierende Fläche entlang einer quadratischen Funktion verläuft.

Zur Erzeugung des matten Leuchtens des Ziffernblattes kann die dem Beobachter zugewandte Oberfläche durch Ätzen oder auch durch einen Prägevorgang aufgerauht sein.

Zur möglichst vollständigen Einleitung des von der Lichtquelle erzeugten Lichts in das Ziffernblatt, kann die Lichtquelle in eine Ausnehmung des Ziffernblattes ragen.

Eine erhabene Anordnung des Ziffernblattes gegenüber einem Gehäuse der Anzeigeeinrichtung wird dadurch ermöglicht, daß das ebene Ziffernblatt in seinem Randbereich zur dem Beobachter abgewandten Seite abgewinkelt ist. Dabei ist vorzugsweise die Ausnehmung im abgewinkelten Bereich des Ziffernblattes angeordnet.

Radial neben dem polierten Kreis oder Ring kann eine Skala angeordnet sein.

Sind auf der aufgerauhten Oberfläche lichtundurchlässige Zeichen aufgebracht, so erscheinen sie für einen Beobachter mit scharfer Kontur in einem leuchtenden Umfeld. Dabei sind die Zeichen besonders deutlich erkennbar, wenn sie von schwarzer Farbe sind.

Die Zeichen können Skalen und/oder alphanummerische Zeichen z.B. eines Anzeigeinstruments im Armaturenbrett eines Kraftfahrzeugs sein, die durch Aufdrucken hergestellt sind.

Ist im Zifferblatt eine koaxial zur Zeigerachse angeordnete, in das Zifferblatt eingeleitete Lichtstrahlen zum Zeiger umlenkende Umlenkfläche ausgebildet, so kann durch eine einzige Lichtquelle sowohl das Zifferblatt als auch der Zeiger beleuchtet werden.

Es ist aber auch möglich, daß koaxial zur Zeigerachse auf der dem Zifferblatt abgewandten Seite des Zeigers eine weitere Lichtquelle angeordnet ist, die es ermöglicht, Zifferblatt und Zeiger mit unterschiedlicher Helligkeit leuchten zu lassen.

Diese koaxial zur Zeigerachse angeordnete Lichtquelle kann auch durch einen zu dieser Stelle geführten Lichtleiter gebildet sein.

Ein Ausführungsbeispiel der Erfindung ist in der Zeichnung dargestellt und wird im folgenden näher beschrieben. Es zeigen

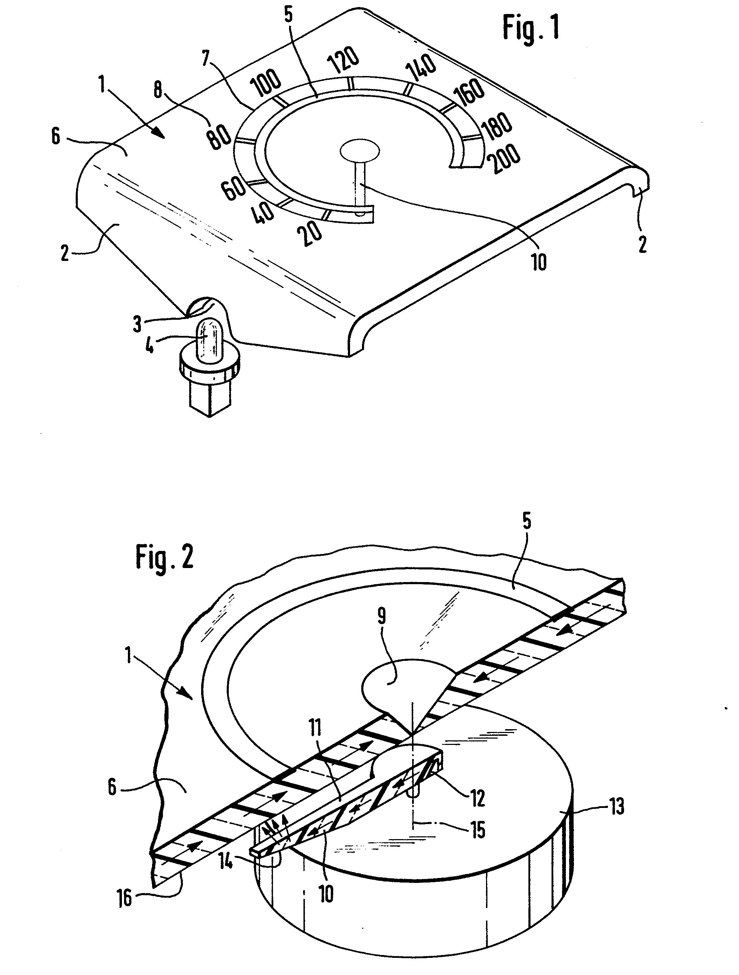

> Figur 1    eine perspektivische Ansicht einer erfindungsgemäßen Anzeigeeinrichtung
>
> Figur 2    einen ausschnittsweisen Teilschnitt der Anzeigeeinrichtung nach Figur 1

Die dargestellte Anzeigeeinrichtung besitzt ein Zifferblatt 1, das aus einem transparentem Material besteht. An zwei einander gegenüberliegenden Randbereichen 2 ist das Zifferblatt 1 nach hinten abgewinkelt. In dem einen abgewinkelten Randbereich 2 befindet sich eine halbkreisförmige Ausnehmung 3, in die eine Lichtquelle 4 hineinragt von der in das als Lichtleiter wirkende Ziffernblatt 1 Licht einleitbar ist.

Bis auf einen offenen Ring 5 besitzt die einem Beobachter zugewandte Oberfläche 6 eine aufgerauhte Struktur, die z.B. durch Ätzen hergestellt sein kann. Im Bereich des Ringes 5 ist die Oberfläche 6 poliert. Dadurch kann das von der Lichtquelle 4 in das Ziffernblatt 1 eingeleitete Licht zwar im aufgerauhten Bereich, nicht aber im polierten Bereich des Ringes 5 zum Beobachter hin austreten. Der Ring erscheint somit dunkel.

Eine auf die aufgerauhte Oberfläche 6 radial neben dem Ring 5 mit schwarzer Farbe aufgedruckte Skala 7 sowie auf die gleiche Weise aufgedruckten Zahlen 8 erscheinen auf dem matt-leuchtenden Hintergrund der Oberfläche 6 mit scharfer Kontur klar und deutlich erkennbar.

Zentrisch zum Ring 5 ist in dem Ziffernblatt 1 durch eine kegelförmige Ausnehmung eine Umlenkfläche 9 gebildet, die das in der Ebene des Ziffernblattes 1 flutende Licht zu einem auf der dem Beobachter abgewandten Seite des Ziffernblattes 1 angeordneten Zeiger 10 umleitet.

Der durch eine Antriebseinrichtung 13 um eine Zeigerachse 15 drehbar antreibbare Zeiger 10 besteht ebenfalls aus einem transparenten lichtleitenden Material und ist bis auf seine dem Ziffernblatt 1 zugewandte Fläche 11 mit einer Ummantelung von lichtreflektierender weißer Farbe versehen.

Das von der Umlenkfläche 9 zum Zeiger 10 geleitete Licht wird an einer Umlenkfläche 12 des Zeigers 10 in Längsrichtung des Zeigers 10 umgelenkt. Durch die lichtreflektierende Ummantelung des Zeigers 10 wird dieses Licht auf das Ziffernblatt 1 zugeleitet, so daß der Zeiger 10 für den Beobachter leuchtend erscheint.

0078372

Durch die aufgerauhte Struktur der Oberfläche 6 erscheint für den Beobachter der Zeiger 10 matt-leuchtend mit unscharfer Kontur. Im Bereich des Rings 5 leuchtet der Zeiger aber klar und konturenscharf strahlend und ist so für den Beobachter besonders deutlich hervorgehoben.

Dies wird dadurch verstärkt, daß die lichtreflektierende Fläche 14 des Zeigers 10 an seinem freien Ende zum Ziffernblatt 1 hin geneigt ist, da dadurch in diesem Bereich die größte im Zeiger 10 flutende Lichtmenge zum Ziffernblatt 1 hin abgestrahlt wird.

Da die dem Beobachter abgewandte Oberfläche 16 des Ziffernblattes 1 zumindest im Schwenkbereich des Zeigers 10 poliert ist, kann vom Zeiger 10 das Licht ungehindert in das Ziffernblatt 1 eintreten.

0078372

VDO Adolf Schindling AG     - 1 -     Gräfstraße 103
                                      6000 Frankfurt/Main 90

                                      G-S Kl-do
                                      1624
                                      20.Oktober 1981

Patentansprüche

1. Anzeigeeinrichtung mit einem Ziffernblatt aus transparentem
   Material, mit einer quer zur Blickrichtung eines Beobachters
   in das Ziffernblatt einstrahlenden Lichtquelle, mit einem
   leuchtenden, um eine Zeigerachse drehbaren Zeiger, der aus
   transparentem Material besteht und auf der dem Beobachter
   abgewandten Seite des Ziffernblattes angeordnet ist, mit einer am Zeiger ausgebildeten, koaxial zur Zeigerachse in den
   Zeiger eingeleitete Lichtstrahlen in Zeigerlängsrichtung lenkenden Umlenkfläche, sowie einer lichtausstrahlenden Ausgestaltung des Zeigers, dadurch gekennzeichnet, daß die dem Beobachter zugewandte Oberfläche (6) des Ziffernblattes (1)
   mit Ausnahme eines zur Zeigerachse (15) konzentrischen polierten Kreises oder Ringes (5) aufgerauht und die dem Beobachter abgewandte Oberfläche (16) des Ziffernblattes (1)
   poliert ist.

2. Anzeigeeinrichtung nach Anspruch 1, dadurch gekennzeichnet,
   daß der Zeiger aus einem fluoreszierenden Material besteht.

3. Anzeigeeinrichtung nach Anspruch 1, dadurch gekennzeichnet, daß der Zeiger (10) mit Ausnahme der dem Ziffernblatt (1) zugewandten Fläche (11) allseitig mit einer lichtreflektierenden Ummantelung versehen ist.

4. Anzeigeeinrichtung nach Anspruch 3, dadurch gekennzeichnet, daß der Zeiger (10) mit einer Ummantelung von weißer Farbe versehen ist.

5. Anzeigeeinrichtung nach einem der vorhergehenden Ansprüche, dadurch gekennzeichnet, daß die lichtreflektierende Fläche (14) im Bereich des freien Endes des Zeigers (10) zum Ziffernblatt (1) hin geneigt ist.

6. Anzeigeeinrichtung nach Anspruch 5, dadurch gekennzeichnet, daß die lichtreflektierende Fläche entlang einer quadratischen Funktion verläuft.

7. Anzeigeeinrichtung nach einem der vorhergehenden Ansprüche, dadurch gekennzeichnet, daß die dem Beobachter zugewandte Oberfläche (6) durch Ätzen aufgerauht ist.

8. Anzeigeeinrichtung nach einem der Ansprüche 1-6, dadurch gekennzeichnet, daß die dem Beobachter zugewandte Oberfläche (6) durch einen Prägevorgang aufgerauht ist.

9. Anzeigeeinrichtung nach einem der vorhergehenden Ansprüche, dadurch gekennzeichnet, daß die Lichtquelle (4) in eine Ausnehmung (3) des Ziffernblattes (1) ragt.

10. Anzeigeeinrichtung nach einem der vorhergehenden Ansprüche, dadurch gekennzeichnet, daß das Ziffernblatt (1) in seinem Randbereich (2) zur dem Beobachter abgewandten Seite abgewinkelt ist.

0078372

11. Anzeigeeinrichtung nach Anspruch 10, dadurch gekennzeichnet, daß die Ausnehmung (3) im abgewinkelten Bereich des Ziffernblattes (1) angeordnet ist.

12. Anzeigeeinrichtung nach einem der vorhergehenden Ansprüche, dadurch gekennzeichnet, daß radial neben dem polierten Kreis oder Ring (5) eine Skala (7) angeordnet ist.

13. Anzeigeeinrichtung nach einem der vorhergehenden Ansprüche, dadurch gekennzeichnet, daß auf der aufgerauhten Oberfläche (6) lichtundurchlässige Zeichen aufgebracht sind.

14. Anzeigeeinrichtung nach Anspruch 13, dadurch gekennzeichnet, daß die Zeichen Skalen (7) und/oder alphanummerische Zeichen (8) sind.

15. Anzeigeeinrichtung nach Anspruch 13, dadurch gekennzeichnet, daß die Zeichen aufgedruckt sind.

16. Anzeigeeinrichtung nach einem der vorhergehenden Ansprüche, dadurch gekennzeichnet, daß im Ziffernblatt (1) eine koaxial zur Zeigerachse (15) angeordnete, in das Ziffernblatt (1) eingeleitete Lichtstrahlen zum Zeiger (10) umlenkende Umlenkfläche (9) ausgebildet ist.

17. Anzeigeeinrichtung nach einem der Ansprüche 1-15, dadurch gekennzeichnet, daß koaxial zur Zeigerachse auf der dem Ziffernblatt abgewandten Seite des Zeigers eine Lichtquelle angeordnet ist.

0078372

Fig. 1

Fig. 2